(19) Europäisches Patentamt / European Patent Office / Office européen des brevets

(11) **EP 3 912 883 B1**

(12) **EUROPÄISCHE PATENTSCHRIFT**

(45) Veröffentlichungstag und Bekanntmachung des Hinweises auf die Patenterteilung:
**30.07.2025   Patentblatt 2025/31**

(21) Anmeldenummer: **21168740.5**

(22) Anmeldetag: **16.04.2021**

(51) Internationale Patentklassifikation (IPC):
**B61L 23/04** *(2006.01)*      **B61L 15/00** *(2006.01)*
**G06T 7/73** *(2017.01)*      **G06T 7/80** *(2017.01)*

(52) Gemeinsame Patentklassifikation (CPC):
**B61L 23/041; B61L 15/0072; G06T 7/80;**
G06T 2207/10016; G06T 2207/30208;
G06T 2207/30252

(54) **VERFAHREN ZUR KALIBRIERUNG EINES ODER MEHRERER, AN EINEM SCHIENENFAHRZEUG ANGEORDNETER UMFELDSENSOREN**

METHOD FOR CALIBRATING ONE OR MORE ENVIRONMENT SENSORS ARRANGED ON A RAILWAY VEHICLE

PROCÉDÉ D'ÉTALONNAGE D'AU MOINS UN CAPTEUR ENVIRONNEMENTAL DISPOSÉ SUR UN VÉHICULE FERROVIAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **20.05.2020   DE 102020206354**

(43) Veröffentlichungstag der Anmeldung:
**24.11.2021   Patentblatt 2021/47**

(73) Patentinhaber: **Siemens Mobility GmbH**
**81739 München (DE)**

(72) Erfinder:
• **Hoppe, Christof**
**48147 Münster (DE)**
• **Kluckner, Stefan**
**12487 Berlin (DE)**

(74) Vertreter: **Siemens Patent Attorneys**
**Postfach 22 16 34**
**80506 München (DE)**

(56) Entgegenhaltungen:
DE-A1- 102016 225 595      DE-A1- 102017 000 307
US-A1- 2015 341 629      US-A1- 2017 032 526

• HOLD S ET AL: "Efficient and robust extrinsic camera calibration procedure for Lane Departure Warning", IEEE INTELLIGENT VEHICLES SYMPOSIUM, June 2009 (2009-06-01), pages 382 - 387, XP031489871

**Beschreibung**

Schienenfahrzeuge, wie zum Beispiel Straßenbahnen oder Regionalzüge, die mit einem Fahrerassistenzsystem ausgestattet sind, benötigen zur Umfelderfassung einen oder meist sogar mehrere Umfeldsensoren. Umfeldsensoren, wie zum Beispiel Videokameras, Laserscanner, Radarsensoren, oder dergleichen, sind zur Erfassung von Bilddatensätzen ausgebildet, die jeweils einen in ihrem Sichtfeld liegenden Umfeldausschnitt repräsentieren.

Die Umfeldsensoren müssen dabei - zusätzlich zu einer intrinsischen Kalibrierung - exakt extrinsisch kalibriert werden, um die jeweils erfassten Umfeldinformationen des einen oder unterschiedlicher Umfeldsensoren aus ihren sensorseitigen Koordinatensystemen in ein gemeinsames fahrzeugseitiges Koordinatensystem überführen zu können. Dies bildet die Grundlage für eine Datenfusion der erfassten Bilddatensätze unterschiedlicher Umfeldsensoren, um dem Fahrerassistenzsystem Umfeldinformationen mit besserer Qualität etwa zur Objekt- und Hinderniserkennung zur Verfügung stellen zu können.

Die extrinsische Kalibrierung eines Umfeldsensors besteht also in der Bestimmung der Koordinatentransformation, die sich aus einer Translation, durch welche der Ursprung des sensorseitigen Koordinatensystems gegenüber dem fahrzeugseitigen Koordinatensystem verschoben ist, und einer Rotation, durch welche die Achsenausrichtungen des sensorseitigen Koordinatensystems gegenüber dem fahrzeugseitigen Koordinatensystem verdreht ist, zusammensetzt.

In vielen Fällen ist es nicht möglich, diese Koordinatentransformation durch händische Messung zu bestimmen, da der Ursprung des sensorseitigen Koordinatensystems ein imaginärer Punkt ist. Weiterhin ist die benötigte Genauigkeit zur Bestimmung der Rotation des sensorseitigen Koordinatensystems relativ zum fahrzeugseitigen so hoch, dass eine manuelle Messung nicht Erfolg versprechend wäre.

Für Videokameras offenbart Z. Zhang in "A Flexible new Technique for Camera Calibration", veröffentlicht im Dezember 2000 in IEEE Transactions on Pattern Analysis and Machine Intelligence, Band 22(11), Seiten 1330 bis 1334, ein Kalibrierverfahren, gemäß dem ein planares Muster relativ zur Videokamera bewegt wird, wobei die Videokamera das Muster in mindestens zwei Positionen aufnimmt. Die Genauigkeit der extrinsischen Kalibrierung hängt von der Größe des planaren Musters, von dessen Abstand zur Videokamera und von der Genauigkeit der Positionierung des Musters zu einem Referenzkoordinatensystem ab.

Bei Schienenfahrzeugen mit Fahrerassistenzsystemen werden Umfeldsensoren unterschiedlicher Erfassungsmodi, mit unterschiedlichen Erfassungsreichweiten und an unterschiedlichen Einbauorten eingesetzt. Daher werden etwa für Videokameras mit unterschiedlichen Brennweiten zur optimalen extrinsischen Kalibrierung mit dem bekannten Verfahren unterschiedlich große planare Muster benötigt. Des Weiteren sind bei Schienenfahrzeugen Videokameras häufig oberhalb des Fahrzeugaufbaus angeordnet, was eine entsprechend hohe Positionierung des planaren Musters erfordert. Außerdem ist es mit einem hohen Aufwand verbunden, für jede in einem experimentellen Umfeld wechselnde Anordnung und Brennweite von Videokameras ein eigenes, optimales Kalibriermuster zu entwickeln.

Aus der Offenlegungsschrift DE 10 2016 225 595 A1 ist ein Verfahren zur Kalibrierung mindestens eines auf einem Schienenfahrzeug installierten Sensors, beispielsweise einer Kamera, bekannt. Der Sensor zeichnet während der Fahrt zu unterschiedlichen Zeitpunkten ein Merkmal eines Referenzobjekts auf. Aus der Kenntnis des Fahrwegs des Schienenfahrzeugs zwischen den Zeitpunkten wird eine Transformation zwischen einem Referenzsystem des Schienenfahrzeugs und einer Pose des Sensors bestimmt. Anhand der Transformation können die äußeren, also extrinsischen Parameter des Sensors bestimmt und der Sensor kalibriert werden.

Der Erfindung liegt daher die Aufgabe zugrunde, ein flexibles Kalibrierverfahren bereitzustellen, mit dem ein oder mehrere, an einem Schienenfahrzeug angeordnete Umfeldsensoren in unterschiedlichen Konstellationen kalibriert werden können.

Die Aufgabe wird erfindungsgemäß gelöst durch ein Verfahren mit den im Anspruch 1 angegebenen Merkmalen. Demnach ist das erfindungsgemäße Verfahren geeignet zum extrinsischen Kalibrieren eines auf einem Schienenfahrzeug angeordneten Umfeldsensors, der zur Erfassung von Bilddatensätzen, die jeweils einen in seinem Sichtfeld liegenden Umfeldausschnitt repräsentieren, ausgebildet ist. Hierzu wird im Bereich eines Gleises mit einem geradlinig verlaufenden Gleisabschnitt eine Kalibriermarkierung in definierter Seitenlage zu einer Gleismitte des Gleisabschnittes angeordnet. Die Kalibriermarkierung kann beispielsweise im oder neben dem Gleisbett positioniert werden. Ihre seitliche Lage zur Gleismitte, die als mittig zwischen den beiden Schienen des Gleisabschnitts verlaufende Linie bzw. Vertikalebene definiert ist, ist dabei bekannt. Die Kalibriermarkierung definiert ein markierungsseitiges Koordinatensystem, dessen Markierungsursprung beispielsweise in der Gleismitte liegt. Während einer Kalibrierfahrt des Schienenfahrzeugs auf dem Gleisabschnitt wird vom Umfeldsensor eine Folge von die Kalibriermarkierung enthaltenden Bilddatensätzen erfasst. Es genügt bei langsamer Kalibrierfahrt eine Gleisabschnittslänge von zum Beispiel 10 m bis 20 m, so dass kontinuierlich, beispielsweise alle 20 cm, ein Bilddatensatz erfasst werden kann. Aus den erfassten Bilddatensätzen wird eine Folge von Positionen des Umfeldsensors relativ zur Kalibriermarkierung er-mittelt. Aus jedem erfassten Bilddatensatz wird anhand an sich bekannter Bildauswertungsverfahren jeweils die Position des Umfeldsensors gegenüber der Kalibriermarkierung berechnet. Die Relativlage des Umfeldsensors zur Gleismitte wird durch Lösung einer Optimierungsaufgabe unter der Nebenbedingung ermittelt, dass die ermittelte Folge von Positionen des Umfeldsensors relativ zur Kalibriermarkierung auf einer Geraden liegt. Ein wesentlicher Kerngedanke der Erfindung liegt in der Ausnutzung der Tatsache, dass der vom Schienenfahrzeug mitgeführte Umfeldsensor durch die Schienenführung über einen längeren Gleisabschnitt nahezu linear geradeaus bewegt wird, während das Schienenfahrzeug auf die Kalibriermarkierung zufährt und der Umfeldsensor die Kalibriermarkierung enthaltende Bilddatensätze erfasst. Nun wird eine mathematische Optimierungsaufgabe definiert, beispielsweise eine Minimierungsaufgabe für eine spezifische Abbildungsgröße des Umfeldsensors, deren Lösung sich erfindungsgemäß durch die Nebenbedingung vereinfacht, dass die Folge von Ursprungspositionen des sensorseitigen Koordinatensystems auf einer Geraden liegen müssen. Im Ergebnis der Optimierungsaufgabe erhält man Translation und Rotation des sensorseitigen Koordinatensystems relativ zum markierungsseitigen Koordinatensystem. Daraus ergibt sich wiederum die gesuchte Koordinatentransformation zwischen dem sensorseitigen Koordinatensystem und dem fahrzeugseitigen Koordinatensystem.

Die hohe Genauigkeit des erfindungsgemäßen Kalibrierverfahrens resultiert aus der Formulierung der mathematischen Optimierungsaufgabe, um die Relativlage zwischen sensorseitigem Koordinatensystem und markierungsseitigem Koordinatensystem, sprich Gleismitte, zu bestimmen. Das Schienenfahrzeug muss mit dem Umfeldsensor keine hochgenauen Markierungspositionen anfahren, sondern der Umfeldsensor wird aus einer langsamen Geradeausfahrt heraus extrinsisch kalibriert. Da das erfindungsgemäße Kalibrierverfahren keine fix installierten Kalibriermarkierungen voraussetzt, lässt es sich einfach und flexibel im Feld anwenden, vorausgesetzt, es ist ein gerader Gleisabschnitt vorhanden. Das Verfahren lässt sich sowohl für die einmalige Kalibrierung bei Auslieferung als auch für eine regelmäßige Neukalibrierung des Umfeldsensors während des Betriebs des Schienenfahrzeugs einsetzen. Besonders vorteilhaft ist dabei auch, dass eine manuelle Vermessung der Einbauposition des Umfeldsensors im Schienenfahrzeug nicht erforderlich ist, was sich insbesondere schwierig gestalten würde, wenn ein Umfeldsensor im Innenraum eines Schienenfahrzeugs verbaut ist.

In einer bevorzugten Ausführungsform des erfindungsgemäßen Verfahrens wird als Optimierungsaufgabe eine Minimierung des Rückprojektionsfehlers des Umfeldsensors gelöst. Für eine Videokamera kann diese aus der Bildverarbeitung bekannte Optimierungsaufgabe unter Nutzung der erfindungsgemäßen Nebenbedingung, dass die Kamerabewegung relativ zur Kalibriermarkierung entlang einer Geraden erfolgt, wie folgt formuliert werden:

$$\min_{R,d_c,v,t} \sum_i^N \sum_c^M K[R|d_c v + t]X_i - x_{ic}$$

wobei

| | |
|---|---|
| i | Laufindex für die N Merkmale der Kalibriermarkierung, |
| c | Laufindex für die M aufgenommenen Bilder, |
| K | intrinsische Kalibrierung der Videokamera (3x3-Matrix), |
| R | Rotation der Videokamera, |
| $d_c$ | Abstand der Videokamera zur Kalibriermarkierung in Bild c, |
| v | Bewegungsvektor des Schienenfahrzeugs, |
| t | Translation des Bewegungsvektors v von der Gleismitte, |
| $X_i$ | 3D-Punkt des Merkmals i gemessen zur Gleismitte und |
| $X_{ic}$ | 2D-Bildpunkt des Merkmals i im Bild c |

bedeuten. Bei den Merkmalen der Kalibriermarkierung kann es sich um vom Umfeldsensor, hier von der Videokamera, erfassbare Mustergrenzen handeln.

In einer weiteren bevorzugten Ausführungsform des erfindungsgemäßen Verfahrens wird aus der Relativlage des Umfeldsensors zur Gleismitte eine Koordinatentransformation für vom Umfeldsensor erfasste Bilddaten in ein vorgebbares Fahrzeugkoordinatensystem bestimmt. Die Festlegung des Ursprungs des fahrzeugseitigen Koordinatensystems ist vorzugsweise so gewählt, dass es mit der Gleismitte übereinstimmt. Alternativ kann der Ursprung des fahrzeugseitigen Koordinatensystems aber außerhalb der Gleismitte gewählt werden, wenn dessen Versatz zur Gleismitte gemessen oder beispielsweise über aus den Konstruktionsdaten, etwa aus einem CAD-Modell, des Schienenfahrzeugs bestimmt werden kann.

In einer weiteren bevorzugten Ausführungsform des erfindungsgemäßen Verfahrens weist die Kalibriermarkierung ein Muster mit vom Umfeldsensor erfassbaren Mustergrenzen auf und ist derart angeordnet, dass die Mustergrenzen eine definierte Seitenlage relativ zur Gleismitte haben. Die Kalibriermarkierung kann zum Beispiel ein Schachbrettmuster aufweisen, dessen Schwarz-Weiß-Übergänge zwischen den Schachbrettfeldern als von einer Videokamera erfassbare Mustergrenzen dienen. Für Umfeldsensoren mit anderen Erfassungsmodi sind Mustergrenzen vorgesehen, die vom jeweiligen Erfassungsmodus des Umfeldsensors detektierbar sind, beispielsweise ein Tiefenprofil.

In einer weiteren bevorzugten Ausführungsform des erfindungsgemäßen Verfahrens weist die Kalibriermarkierung eine Flächenausdehnung auf, deren Anteil am erfassten Bilddatensatz weniger als 5%, vorzugsweise höchstens 1% ausmacht. Während extrinsische Kalibrierungen nach dem Standardverfahren bei solch kleinflächigen Kalibiermarkierungen versagen würden, wird mit dem erfindungsgemäßen Verfahren eine hohe Kalibriergenauigkeit auch mit einer relativ kleinen Kalibriermarkierung, beispielsweise im Format A0, erreicht werden. Diese erspart in der Praxis wiederum das Design unterschiedlicher Kalibriermarkierungen für unterschiedliche Reichweiten und unterschiedliche Einbaupositionen von Umfeldsensoren.

Die Kalibriermarkierung kann gleismittig auf dem Gleisabschnitt positioniert werden. In einer weiteren bevorzugten Ausführungsform des erfindungsgemäßen Verfahrens ist die Kalibriermarkierung im Bereich des Gleises außerhalb des Lichtraumprofils des Schienenfahrzeugs angeordnet. Wichtig ist dabei, dass die Positionen der vom Umfeldsensor erfassbaren Mustergrenzen relativ zur Gleismitte bekannt sind. Wird die Kalibriermarkierung außerhalb des Lichtraumprofils angeordnet, kann diese beispielsweise fest installiert werden, so dass für die Durchführung der Kalibrierung keine Fachpersonal erforderlich ist.

In einer weiteren bevorzugten Ausführungsform des erfindungsgemäßen Verfahrens wird die Kalibriermarkierung mittels einer Halterung in einer definierten Seitenlage zur Gleismitte gehalten. Eine Halterung, die sich mittels eines Gleisaufsatzes einfach mittig zwischen die Schienen des Gleisabschnitts positionieren lässt, gewährleistet, dass die Kalibriermarkierung und damit ihre Mustergrenzen eine definierte Position zur Gleismitte einnehmen, wodurch jeglicher Messaufwand im Feld entfällt. Ebenso kann eine Halterung für die Kalibriermarkierung, die mit einem Fundament oder einem Bauwerk neben dem Gleis fest oder auswechselbar verbunden ist, diesen Zweck erfüllen.

In einer weiteren bevorzugten Ausführungsform ist das erfindungsgemäße Verfahrens geeignet zum Kalibrieren mehrerer auf einem Schienenfahrzeug angeordneter Umfeldsensoren, die zur Erfassung von Bilddatensätzen, die jeweils einen in ihrem Sichtfeld liegenden Umfeldausschnitt repräsentieren, ausgebildet sind. Dabei wird jeder der Umfeldsensoren nach einem Verfahren der Ansprüche 1 bis 7 in einer gemeinsamen Kalibrierfahrt kalibriert. Das erfindungsgemäße Kalibrierverfahren kann für mehrere installierte Umfeldsensoren gleicher oder unterschiedlicher Reichweiten und/oder für mehrere angeordnete Umfeldsensoren unterschiedlicher Erfassungsmodi verwendet werden, wobei eine Kalibrierfahrt ausreicht, um alle Umfeldsensoren zu kalibrieren. Beispielsweise können gleichzeitig eine Videokamera mit Zoomobjektiv und eine Videokamera mit Weitwinkelobjektiv extrinsisch kalibriert werden. Das erfindungsgemäße Verfahren ist daher flexibel in vielen Projekten für unterschiedliche Anwendungen einsetzbar.

Grundsätzlich kann für jeden Erfassungsmodus von unterschiedlichen Umfeldsensoren eine eigene Kalibriermarkierungen vorgesehen sein. In einer weiteren bevorzugten Ausführungsform des erfindungsgemäßen Verfahrens wird eine für mehrere oder alle Umfeldsensoren gemeinsame Kalibriermarkierung verwendet.

Die Kalibriermarkierung weist demnach erfassbare Mustergrenzen für jede Art von zu kalibrierenden Umfeldsensor auf. Dadurch genügt eine einzige Kalibriermarkierung, was das erfindungsgemäße Verfahren weiter vereinfacht.

In einer weiteren bevorzugten Ausführungsform des erfindungsgemäßen Verfahrens ist der oder sind die Umfeldsensoren aus der Gruppe von rückprojizierenden Sensoren, einschließlich Videokameras und/oder Radarsensoren und/oder Laserscanner, auswählbar. Für diese Art von Umfeldsensoren lässt sich eine Optimierungsaufgabe für den Rückprojektionsfehler formulieren, was für die hohe Genauigkeit des erfindungsgemäßen Kalibrierverfahrens ursächlich ist.

Weitere Eigenschaften und Vorteile des erfindungsgemäßen Verfahrens ergeben sich aus nachfolgender Beschreibung eines Ausführungsbeispiels anhand der Zeichnungen, in deren

FIG 1     eine Draufsicht auf eine Kalibrieranordnung für das erfindungsgemäße Verfahren und

FIG 2     ein aufgenommener Bilddatensatz des Umfeldsensors während der Kalibrierfahrt

schematisch veranschaulicht sind.

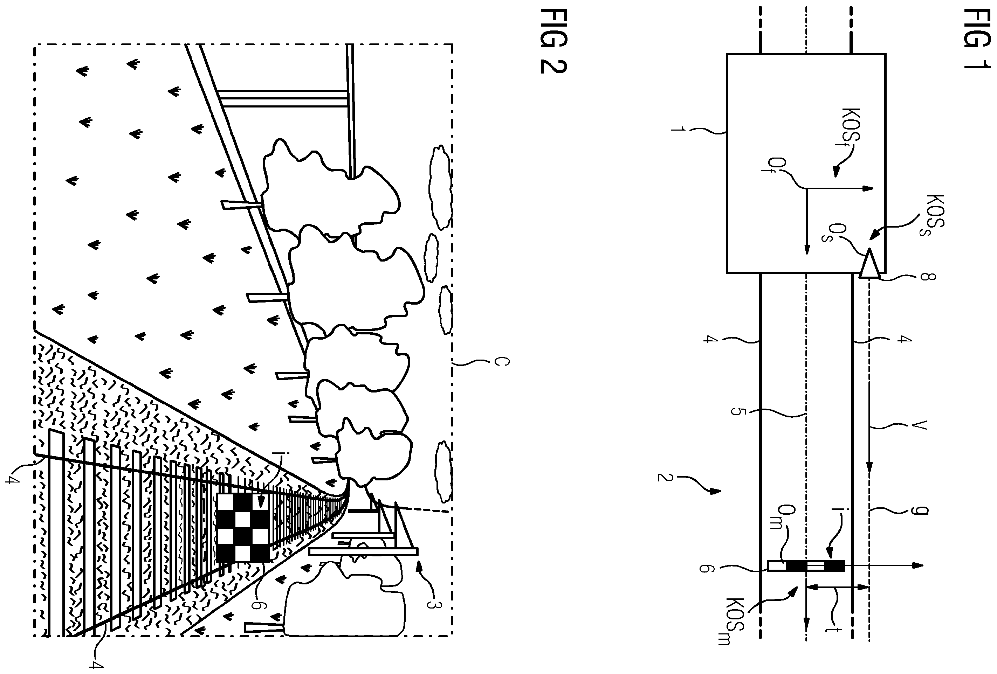

Gemäß FIG 1 dient das erfindungsgemäße Verfahren zum extrinsischen Kalibrieren eines auf einem Schienenfahrzeug 1 angeordneten Umfeldsensors 8. Der Umfeldsensor ist im dargestellten Ausführungsbeispiel als Videokamera 8 ausgebildet, die im Frontbereich eines als Straßenbahn 1 ausgebildeten Schienenfahrzeugs angeordnet ist. Die Videokamera 8 ist zur Erfassung von Bilddatensätzen c, die jeweils einen in ihrem in Fahrtrichtung ausgerichteten Sichtfeld liegenden Umfeldausschnitt repräsentieren, ausgebildet. Das erfindungsgemäße Verfahren kann auch für mehrere am Schienenfahrzeug angeordnete Umfeldsensoren 8 mit ggf. unterschiedlichen Erfassungsmodi verwendet werden, beispielsweise für Laserscanner oder Radarsensoren. Der eine oder die mehreren Umfeldsensoren können auch an anderen Schienenfahrzeugen 8, etwa an Zügen, Lokomotiven und dergleichen, angeordnet sein.

Im Bereich eines Gleises mit einem geradlinig verlaufenden Gleisabschnitt 2 wird eine Kalibriermarkierung 6 in definierter Seitenlage zu einer Gleismitte 5 des Gleisabschnittes 2 angeordnet. Die Kalibriermarkierung 6 weist ein Muster mit von der Videokamera 8 erfassbaren Mustergrenzen i auf und ist derart angeordnet, dass die Mustergrenzen i eine definierte Seitenlage relativ zur Gleismitte 5 haben. Im dargestellten Ausführungsbeispiel weist die Kalibriermarkierung 6 ein Schachbrettmuster auf, dessen Schwarz-Weiß-Übergänge als Mustergrenzen i aus dem Videobilddatensatz c erfassbar ist. Es genügt, wenn die Kalibriermarkierung 6 eine Flächenausdehnung aufweist, deren Anteil am erfassten Bilddatensatz c weniger als 5%, vorzugsweise höchstens 1% ausmacht. Die Kalibriermarkierung 6 kann mittels einer Halterung in einer definierten Seitenlage zur Gleismitte 5 gehalten werden, im dargestellten Ausführungsbespiel mittig zur Gleismitte 5. Bei der Kalibrierung mehrere Umfeldsensoren genügt die Anordnung von nur einer Kalibriermarkierung 6. Falls Umfeldsensoren 8 mit unterschiedlichen Erfassungsmodi verwendet werden, weist die Kalibriermarkierung 6 Mustergrenzen i auf, die von den jeweiligen Umfeldsensoren 8 erfassbar sind.

Während einer Kalibrierfahrt der Straßenbahn 1, die auf dem Gleisabschnitt 2 elektrische Energie aus einer Oberleitungsanlage 3 entnimmt, wird von der Videokamera 8 gemäß FIG 2 eine Folge von die Kalibriermarkierung 6 enthaltenden Bilddatensätzen c erfasst. Aus den erfassten Bilddatensätzen c wird eine Folge von Positionen der Videokamera 8 relativ zur Kalibriermarkierung 6 ermittelt. Die Relativlage der Videokamera 8 zur Gleismitte 5 wird durch Lösung einer Optimierungsaufgabe unter der Nebenbedingung, dass die ermittelte Folge von Positionen der Videokamera 8 relativ zur Kalibriermarkierung 6 auf einer Geraden g liegt, ermittelt. Als Optimierungsaufgabe wird vorzugsweise eine Minimierung des Rückprojektionsfehlers der Videokamera gemäß dem Term

$$\min_{R,d_c,v,t} \sum_{i}^{N} \sum_{c}^{M} K[R|d_c v + t]X_i - x_{ic}$$

gelöst. Darin bedeuten:

i     Laufindex für die N Merkmale der Kalibriermarkierung 6,
c     Laufindex für die M aufgenommenen Bilder,
K     intrinsische Kalibrierung der Videokamera 8,
R     Rotation der Videokamera 8,
$d_c$     Abstand der Videokamera 8 zur Kalibriermarkierung 6 in Bild c,
v     Bewegungsvektor der Straßenbahn 1,
t     Translation des Bewegungsvektors v von der Gleismitte 5,
$X_i$     3D-Punkt des Merkmals i gemessen zur Gleismitte 5 und
$X_{ic}$     2D-Bildpunkt des Merkmals i im Bild c.

Aus der Relativlage der Videokamera 8 zur Gleismitte 5 wird eine Koordinatentransformation für von der Videokamera 8 erfasste Bilddaten in ein vorgebbares fahrzeugseitiges Koordinatensystem $KOS_f$ bestimmt. Die Koordinatentransformation setzt sich aus einer Translation, durch welche der Ursprung $O_s$ des sensorseitigen Koordinatensystems $KOS_s$ gegenüber dem Ursprung $O_f$ des fahrzeugseitigen Koordinatensystem $KOS_f$ verschoben ist, und einer Rotation R, durch welche die Achsenausrichtungen des sensorseitigen Koordinatensystems $KOS_s$ gegenüber dem fahrzeugseitigen Koordinatensystem $KOS_f$ verdreht ist.

## Patentansprüche

1. Verfahren zum Kalibrieren eines auf einem Schienenfahrzeug (1) angeordneten Umfeldsensors (8), der zur Erfassung von Bilddatensätzen (c), die jeweils einen in seinem Sichtfeld liegenden Umfeldausschnitt repräsentieren, ausgebildet ist,

   - wobei im Bereich eines Gleises mit einem geradlinig verlaufenden Gleisabschnitt (2) eine Kalibriermarkierung (6) in definierter Seitenlage zu einer Gleismitte (5) des Gleisabschnittes (2) angeordnet wird,
   - wobei während einer Kalibrierfahrt des Schienenfahrzeugs (1) auf dem Gleisabschnitt (2) vom Umfeldsensor (8) eine Folge von die Kalibriermarkierung (6) enthaltenden Bilddatensätzen (c) erfasst wird,
   - wobei aus den erfassten Bilddatensätzen (c) eine Folge von Positionen des Umfeldsensors (8) relativ zur Kalibriermarkierung (6) ermittelt wird,
   - wobei die Relativlage des Umfeldsensors (8) zur Gleismitte (5) durch Lösung einer Optimierungsaufgabe unter der Nebenbedingung, dass die ermittelte Folge von Positionen des Umfeldsensors (8) relativ zur Kalibriermarkierung (6) auf einer Geraden (g) liegt, ermittelt wird.

2. Verfahren nach Anspruch 1,

   - wobei als Optimierungsaufgabe eine Minimierung des Rückprojektionsfehlers des Umfeldsensors (8) gelöst wird.

3. Verfahren nach einem der vorangehenden Ansprüche,

   - wobei aus der Relativlage des Umfeldsensors (8) zur Gleismitte (5) eine Koordinatentransformation für vom Umfeldsensor (8) erfasste Bilddaten in ein vorgebbares fahrzeugseitiges Koordinatensystem (KOSf) bestimmt wird.

4. Verfahren nach einem der vorangehenden Ansprüche,

   - wobei die Kalibriermarkierung (6) ein Muster mit vom Umfeldsensor (8) erfassbaren Mustergrenzen (i) aufweist und derart angeordnet ist, dass die Mustergrenzen (i) eine definierte Seitenlage relativ zur Gleismitte (5) haben.

5. Verfahren nach einem der vorangehenden Ansprüche,

   - wobei die Kalibriermarkierung (6) eine Flächenausdehnung aufweist, deren Anteil am erfassten Bilddatensatz weniger als 5%, vorzugsweise höchstens 1% ausmacht.

6. Verfahren nach einem der vorangehenden Ansprüche,

- wobei die Kalibriermarkierung (6) im Bereich des Gleises außerhalb eines Lichtraumprofils des Schienenfahrzeugs (1) angeordnet ist.

7. Verfahren nach einem der vorangehenden Ansprüche,

- wobei die Kalibriermarkierung (6) mittels einer Halterung in einer definierten Seitenlage zur Gleismitte (5) gehalten wird.

8. Verfahren zum Kalibrieren mehrerer auf einem Schienenfahrzeug (1) angeordneter Umfeldsensoren (8), die zur Erfassung von Bilddatensätzen (c), die jeweils einen in ihrem Sichtfeld liegenden Umfeldausschnitt repräsentieren, ausgebildet sind,

- wobei jeder der Umfeldsensoren (8) nach einem Verfahren der vorangehenden Ansprüche in einer gemeinsamen Kalibrierfahrt kalibriert wird.

9. Verfahren nach Anspruch 8,

- wobei eine für mehrere oder alle Umfeldsensoren (8) gemeinsame Kalibriermarkierung (6) verwendet wird.

10. Verfahren nach einem der vorangehenden Ansprüche,

- wobei der oder die Umfeldsensoren (8) aus der Gruppe von rückprojizierender Sensoren, einschließlich Videokameras und/oder Radarsensoren und/oder Laserscanner, auswählbar sind.

**Claims**

1. Method for calibrating an environment sensor (8) arranged on a rail vehicle (1), which is embodied to capture image data sets (c), which each represent an environment segment lying in the field of view thereof,

- wherein, in the region of a track with a track section (2) running in a straight line, a calibration marking (6) is arranged at a defined lateral position in relation to a track centre (5) of the track section (2),
- wherein, during a calibration journey of the rail vehicle (1) on the track section (2), a series of image data sets (c) containing the calibration marking (6) is captured by the environment sensor (8),
- wherein a series of positions of the environment sensor (8) relative to the calibration marking (6) is ascertained from the captured image data sets (c),
- wherein the relative position of the environment sensor (8) in relation to the track centre (5) is ascertained by resolving an optimisation task, with the side condition that the ascertained series of positions of the environment sensor (8) lies on a straight line (g) relative to the calibration marking (6).

2. Method according to claim 1,

- wherein a minimisation of the backprojection error of the environment sensor (8) is resolved as the optimisation task.

3. Method according to one of the preceding claims,

- wherein a coordinate transformation for image data captured by the environment sensor (8) into a specifiable vehicle-side coordinate system (KOSf) is determined from the relative position of the environment sensor (8) in relation to the track centre (5).

4. Method according to one of the preceding claims,

- wherein the calibration marking (6) has a pattern with pattern boundaries (i), which can be captured by the environment sensor (8), and is arranged in such a manner that the pattern boundaries (i) have a defined lateral position relative to the track centre (5).

5. Method according to one of the preceding claims,

- wherein the calibration marking (6) has a surface extension which makes up a portion of less than 5%, preferably at most 1%, of the captured image data set.

6. Method according to one of the preceding claims,

- wherein the calibration marking (6) is arranged in the region of the track outside of a clearance profile of the rail vehicle (1).

7. Method according to one of the preceding claims,

- wherein the calibration marking (6) is kept at a defined lateral position in relation to the track centre (5) by means of a bracket.

**8.** Method for calibrating multiple environment sensors (8) arranged on a rail vehicle (1), which are embodied to capture image data sets (c), which each represent an environment segment lying in the field of view thereof,

- wherein each of the environment sensors (8) is calibrated according to a method of the preceding claims in a common calibration journey.

**9.** Method according to claim 8,

- wherein a calibration marking (6) is used that is common to multiple or all environment sensors (8).

**10.** Method according to one of the preceding claims,

- wherein the environment sensor or sensors (8) can be selected from the group consisting of rear projection sensors, including video cameras and/or radar sensors and/or laser scanners.

**Revendications**

**1.** Procédé d'étalonnage d'un capteur (8) d'environnement, qui est monté sur un véhicule (1) ferroviaire et qui est constitué pour la saisie d'ensembles (c) de données d'image, qui représentent respectivement un extrait de l'environnement se trouvant dans son champ de vue,

- dans lequel, dans la partie d'une voie ayant un tronçon (2) de voie s'étendant en ligne droite, on met un repère (6) d'étalonnage en une position latérale définie par rapport à un milieu (5) de voie du tronçon (2) de voie,
- dans lequel pendant une circulation d'étalonnage du véhicule (1) ferroviaire, on saisit sur le tronçon (2) de voie, par le capteur (8) d'environnement, une suite d'ensembles (c) de données d'image contenant le repère (6) d'étalonnage,
- dans lequel on détermine, à partir des ensembles (c) de données d'images saisis, une suite de positions du capteur (8) d'environnement par rapport au repère (6) d'étalonnage,
- dans lequel on détermine la position relative du capteur (8) d'environnement par rapport au milieu (5) de la voie en résolvant un problème d'optimisation, sous la condition secondaire que la suite déterminée de positions du capteur (8) d'environnement par rapport au repère (6) d'étalonnage se trouve sur une droite (g).

**2.** Procédé suivant la revendication 1,

- dans lequel on résout comme problème d'optimisation une minimisation de l'erreur de rétroprojection du capteur (8) d'environnement.

**3.** Procédé suivant l'une des revendications précédentes,

- dans lequel on détermine, à partir de la position relative du capteur (8) d'environnement par rapport au milieu (5) de la voie, une transformation de coordonnées pour des données d'image saisies par le capteur (8) d'environnement dans un système (KOSf) de coordonnées embarqué sur le véhicule, pouvant être donné à l'avance.

**4.** Procédé suivant l'une des revendications précédentes,

- dans lequel le repère (6) d'étalonnage a un motif ayant des limites (i) de motif pouvant être détectées par le capteur (8) d'environnement et est disposé de manière à ce que les limites (i) du motif aient une position latérale définie par rapport au milieu (5) de la voie.

**5.** Procédé suivant l'une des revendications précédentes,

- dans lequel le repère (6) d'étalonnage a une étendue en surface, dont la proportion de l'ensemble de données d'image saisi représente moins de 5 %, de préférence 1 % au plus.

**6.** Procédé suivant l'une des revendications précédentes,

- dans lequel le repère (6) d'étalonnage est disposé dans la partie de la voie à l'extérieur d'un profil d'espace libre du véhicule (1) ferroviaire.

**7.** Procédé suivant l'une des revendications précédentes,

- dans lequel on maintient le repère (6) d'étalonnage au moyen d'une fixation en une position latérale définie par rapport au milieu (5) de la voie.

**8.** Procédé d'étalonnage de plusieurs capteurs (8) d'environnement, qui sont montés sur un véhicule (1) ferroviaire et qui sont constitués pour la saisie d'ensembles (c) de données d'image, qui représentent respectivement un extrait d'environnement se trouvant dans son champ de vue,

- dans lequel on étalonne chacun des capteurs (8) d'environnement par un procédé suivant les revendications précédentes dans une circulation d'étalonnage commune.

9. Procédé suivant la revendication 8,

    - dans lequel on utilise un repère (6) d'étalonnage commun pour plusieurs ou pour tous les capteurs (8) d'environnement.

10. Procédé suivant l'une des revendications précédentes,

    - dans lequel le ou les plusieurs capteurs (8) d'environnement peuvent être choisis dans le groupe de capteurs à rétroprojection, y compris des caméras vidéos et/ou des capteurs radar et/ou des scanners laser.

FIG 1

FIG 2

**IN DER BESCHREIBUNG AUFGEFÜHRTE DOKUMENTE**

**In der Beschreibung aufgeführte Patentdokumente**

• DE 102016225595 A1

**In der Beschreibung aufgeführte Nicht-Patentliteratur**

• **Z. ZHANG**. A Flexible new Technique for Camera Calibration. *IEEE Transactions on Pattern Analysis and Machine Intelligence*, December 2000, vol. 22 (11), 1330-1334